# EUROPEAN PATENT SPECIFICATION

(11) **EP 3 955 007 B1**
(45) Date of publication and mention of the grant of the patent: **20.11.2024**
(21) Application number: 20787159.1
(22) Date of filing: 08.04.2020
(51) Int. Cl.: G01N 35/02, G01N 35/04

(54) **TRANSPORT MECHANISM AND ANALYZING DEVICE**
TRANSPORTMECHANISMUS UND ANALYSEVORRICHTUNG
MÉCANISME DE TRANSPORT ET DISPOSITIF D'ANALYSE

(30) Priority: 12.04.2019 JP 2019076682
(43) Date of publication of application: 16.02.2022
(73) Proprietor: PHC Corporation, Toon-shi Ehime 791-0395 (JP)
(72) Inventor: AZUMA, Miyuki, Ehime 791-0395 (JP); ISHIGURO, Masatoshi, Ehime 791-0395 (JP)
(74) Representative: Ribeiro, James Michael
(86) International application number: PCT/JP2020/015848
(87) International publication number: WO 2020/209297

(56) References cited:
- EP-A2- 2 299 280
- JP-A- 2002 311 035
- JP-A- 2008 020 194
- JP-A- 2010 181 197
- JP-A- 2010 237 155
- JP-A- 2018 054 505
- JP-A- H09 304 397
- US-A1- 2019 033 334

## Description

### [Technical Field]

The present invention relates to a transport mechanism and an analyzing device.

### [Background Art]

A device that can perform a plurality of types of analysis based on different measurement methods, such as a biochemical analysis and an immunological analysis, has been proposed (e.g. PTL 1). This device includes: (1) a sample supply unit that includes a sample rack on which a plurality of biological samples are placed, (2) a first measuring unit which can hold a plurality of mutually independent reaction cuvettes so as to be removable independently from each other, and includes a first optical system measuring member, (3) a sample transport member that can transport biological samples from the sample supply unit to the reaction cuvettes on the first measuring unit, (4) a second measuring unit that can hold a plurality of mutually independent reaction cuvettes so as to be removable independently from each other, and includes a second optical system measuring member, (5) a cuvette transfer member that can transfer the reaction cuvettes on the first measuring unit to the second measuring unit, (6) a reagent supply unit that contains reagent that is used for the measurement in the first measuring unit and the measurement in the second measuring unit, and (7) a reagent transport member that can transport reaction reagent from the reagent supply unit to the reaction cuvettes on the first measuring unit and/or the second measuring unit independently. After the biological samples are dispensed on the first measuring unit, the reaction cuvettes on the second measuring unit are transferred by the cuvette transfer member from the first measuring unit to the second measuring unit, and are held by the second measuring unit, whereby different measurements can be performed in the first measuring unit and in the second measuring unit, respectively.

An automatic immunological analyzing device that is also proposed includes: a rack on which reaction containers are vertically held; a means that circulates the rack endlessly for intermittently transferring the rack; and a means that dispenses a required amount of a sample to each reaction container at a predetermined position of a rack transfer path through which the rack is transferred (e.g., PTL 2) .

An automatic analyzing device that is also proposed includes: a transport line for transporting a rack, on which sample containers containing samples are set, from a rack entry unit to a rack storing unit; and an analyzing unit that is disposed between the rack entry unit and the rack storing unit along the transport line. This automatic analyzing device includes: a circulating line configured to circulate a rack from the rack storing unit side to the rack entry unit side; an entry side rack number reading unit that is disposed on the entry side of the transport line, and reads a rack number of a rack that is transported; a storage unit that stores the sequence of racks read by the entry side rack number reading unit; a storing side rack number reading unit that is disposed on the storage side of the transport line and reads a rack number of a rack that is transported; and a control unit that stores a rack in the rack storing unit if the rack of which rack number is read by the storing side rack number reading unit is in a sequence to be stored, or circulates the rack to the rack entry side via the circulating line if not (e.g. PTL 3).

### [Citation List]

### [Patent Literature]

[PTL 1] WO 2006/107016
[PTL 2] Japanese Patent Application Publication No. H06-167503
[PTL 3] Japanese Patent Application Publication No. 2000-266761
[PTL 4] US 2019/033334 A1 discloses a sample rack conveyance device including a pusher member, a driving unit, a control unit, a front rack detection sensor, and a pusher movement amount storage unit. The front rack detection sensor moves together with the pusher member and detects an additional sample rack arranged more frontward in the conveyance direction than the sample rack conveyed by the pusher member. The pusher movement amount storage unit stores the movement amount at the time of movement from a sample rack conveyance start position on the pusher member. Furthermore, the control unit controls driving of the driving unit on the basis of the movement amount stored in the pusher movement amount storage unit.
[PTL 5] EP 2299280 A2 discloses a sample processing apparatus including a sample processing unit for obtaining a sample from a sample container and performing a predetermined process of the sample; a transport unit which includes a transport region for transporting, in a transport operation, a sample rack holding the sample container to the sample processing unit, and a rack removal region where the sample rack is accessible to an operator. A restraining member is also provided, which restrains contact by the operator to the sample rack on the transport region. A transport controller controls the transport unit to transport the sample rack on the transport region to the rack removal region after a predetermined transport suspension event occurs during the transport operation.

### [Summary of Invention]

### [Technical Problem]

Generally for analyzing devices which automatically perform some kind of test on a specimen, decreasing the time required for the test is demanded. It is an object of the present invention to improve the efficiency of the sampling processing.

### [Solution to Problem]

A transport mechanism according to the present invention is a transport mechanism that is disposed in a measuring device used for dispensing biological samples from sample containers configured to contain the biological samples to cuvettes, so as to perform a predetermined measurement, and transports a sample rack configured to hold the sample containers, the transport mechanism including: a table on which the sample rack is provided in plurality and sequentially placed; a container sensor unit configured to identify the sample containers held on the sample rack; and a transport device configured to transport the sample rack holding the sample containers identified by the container sensor unit to a dispensing position at which the biological samples are dispensed. The container sensor unit is connected to the transport device, wherein the transport device and the container sensor unit move in tandem as one unit, so that the transport device transports a preceding sample rack while the container sensor unit identifies the sample containers held on a subsequent sample rack.

Since a preceding sample rack is transported while sample containers held on a subsequent sample rack are identified, the presence of each sample container and identification information thereof can be specified (an advance-read operation), and throughput per unit time can be improved. In other words, the efficiency of the sampling processing can be improved.

The transport mechanism may further include a sample rack detecting device configured to determine whether the subsequent sample rack exists, and when the sample rack detecting device determines that the subsequent sample rack exists, the container sensor unit may identify sample containers held on the subsequent sample rack. Then the above mentioned advance-read operation can be performed after determining whether the subsequent sample rack is continuously carried in.

Predetermined identification information may be indicated on an outer face of each of the sample containers, and the container sensor unit may include: a sample container identifying device configured to read the identification information indicated on each of the sample containers; and a type determining device configured to determine a type of each of the sample containers. The transport device may transport a preceding sample rack, while the sample container identifying device reads the identification information indicated on each sample container held on the subsequent sample rack, and the type determining device may determine the type of each of the sample containers held on the subsequent sample rack. Then in a case of processing a plurality of types of sample containers, the type of each container can be determined. The type detecting device may be an infrared sensor, for example, and may determine the type of each sample container based on the shape (e.g., height) of the sample container. In a case where both the identification information and type of each sample container are successfully read, it may be determined that this sample container is held on the sample rack, and may be regarded as a target of sampling in the subsequent processing steps.

The sample rack may hold a plurality of sample containers in a row in a first direction in plan view, and a plurality of sample racks may be placed on a table in a second direction, which is perpendicular to the first direction, in plan view. The transport device may transport a preceding sample rack in the first direction, while the container sensor unit identifies the sample containers held on a subsequent sample rack. Thereby the direction of transporting the preceding sample rack matches with the direction of the sample containers lined up in the subsequent sample rack, and the processing of the transport device transporting the preceding sample rack and the processing of identifying the sample containers held on the subsequent sample rack, can be performed in parallel.

An analyzing device according to another aspect of the present invention may include the abovementioned transport mechanism and a computer that controls operation of the transport mechanism. Thereby the efficiency of the sampling processing of the analyzing device can be improved.

The content described in "Solution to Problem" may be combined within a scope of not departing from the problem and technical spirit of the present invention. And the content described in "Solution to Problem" can be provided as a system, including a device or a plurality of devices (e.g. computer(s)), a method executed by a computer, or a program executed by a computer. This program may be executed over a network. A recording medium holding this program may be provided.

### [Advantageous Effects of Invention]

The present invention can improve the efficiency of the sampling processing.

### [Brief Description of Drawings]

[Fig. 1]

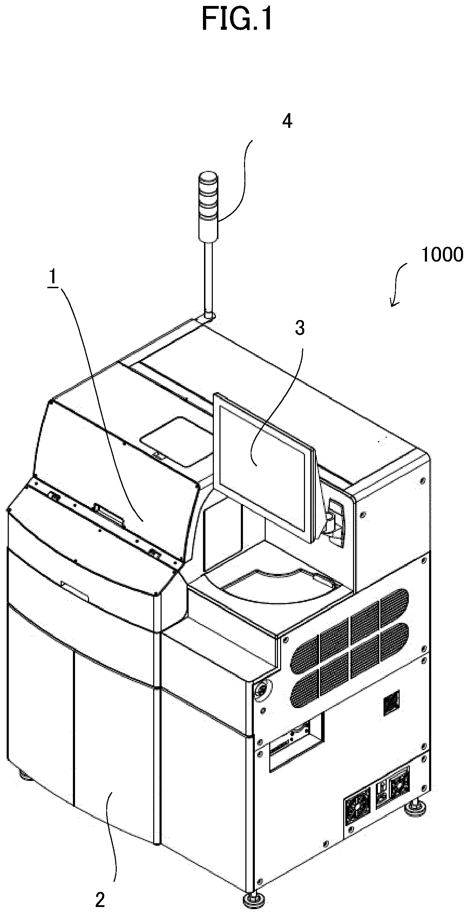

   Fig. 1 is a diagram depicting an example of an external view of an analyzing device.
[Fig. 2]

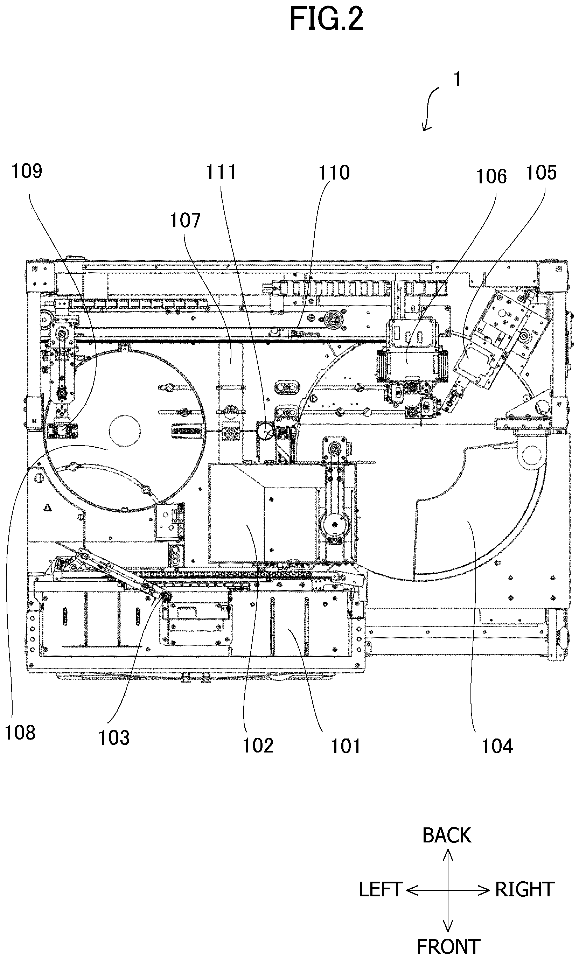

   Fig. 2 is a plan view depicting an example of the configuration inside a measuring unit housing portion of the analyzing device.
[Fig. 3]

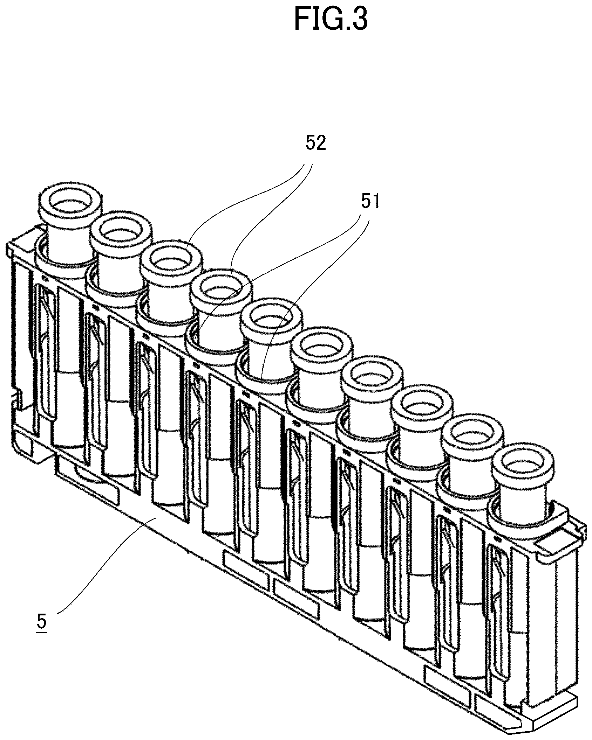

   Fig. 3 is a perspective view depicting an example of a sample rack.
[Fig. 4]

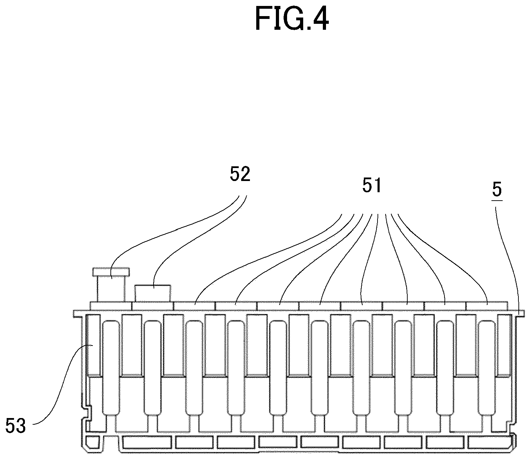

   Fig. 4 is a front view depicting an example of the sample rack.
[Fig. 5]

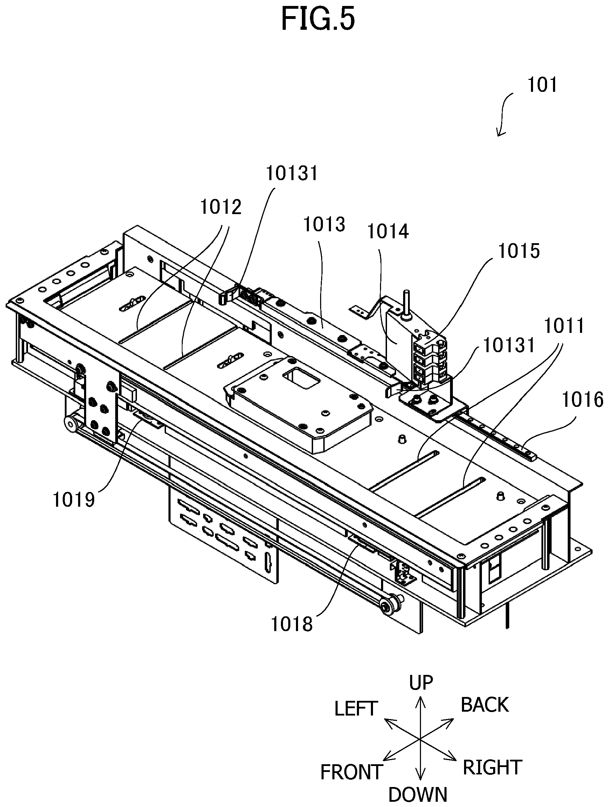

   Fig. 5 is a perspective view depicting an example of a table.
[Fig. 6]

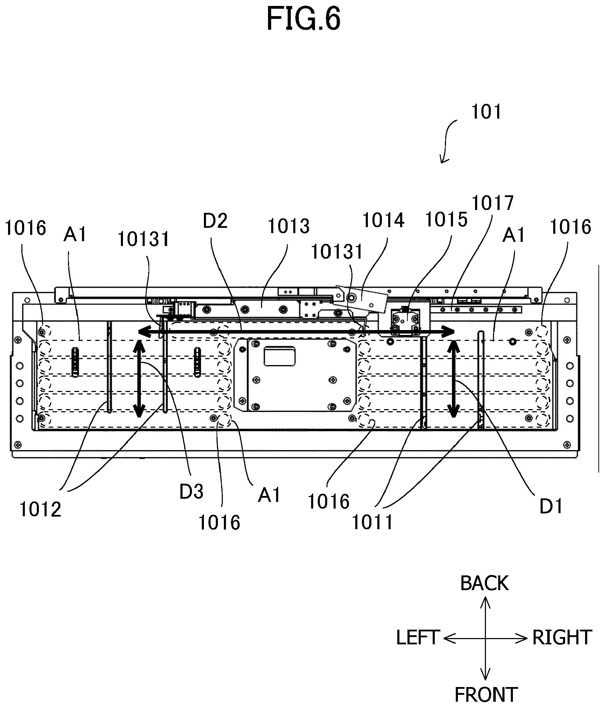

   Fig. 6 is a plan view depicting an example of the table.
[Fig. 7]

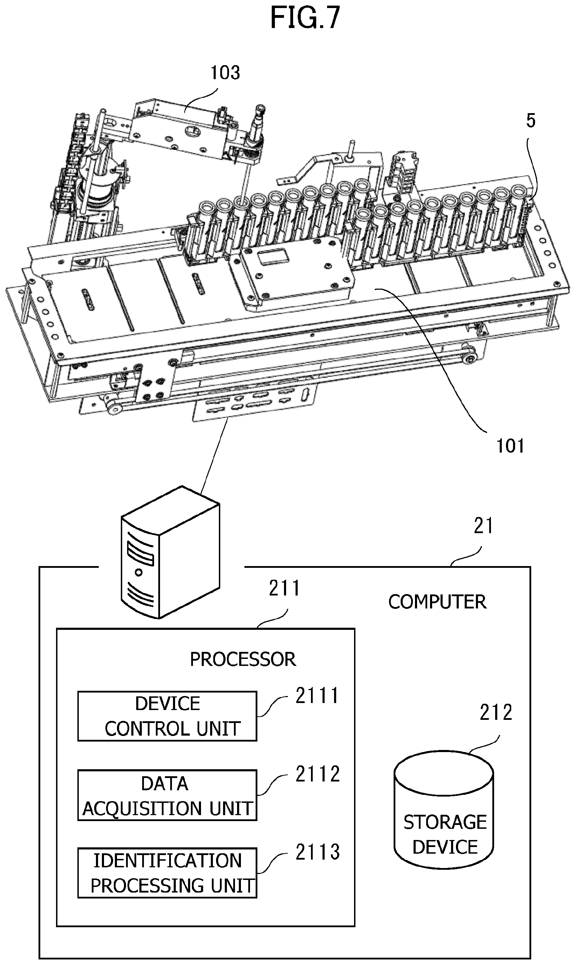

   Fig. 7 is a block diagram of a computer that controls sampling.
[Fig. 8]

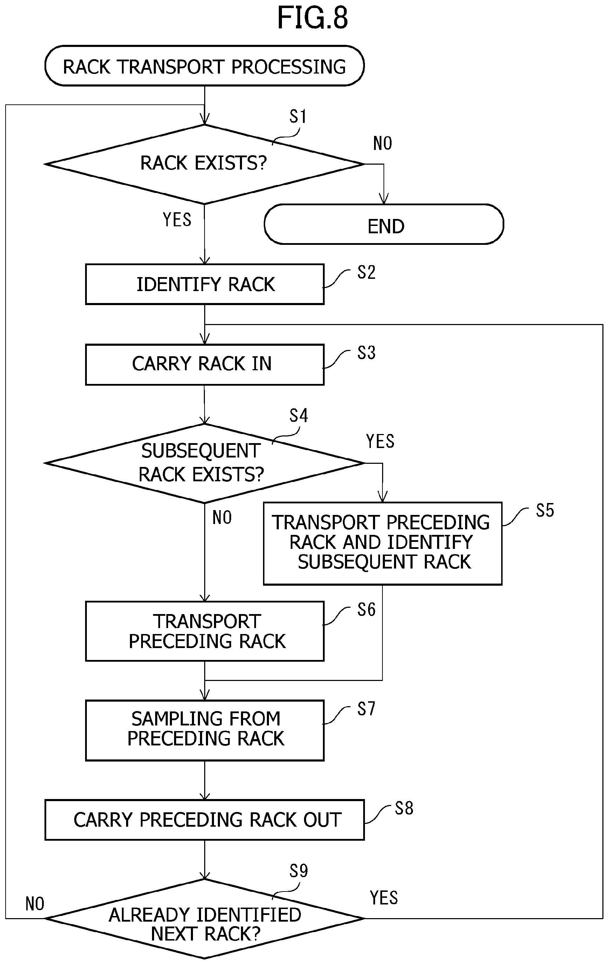

   Fig. 8 is a flow chart depicting an example of a rack transport processing.
[Fig. 9]

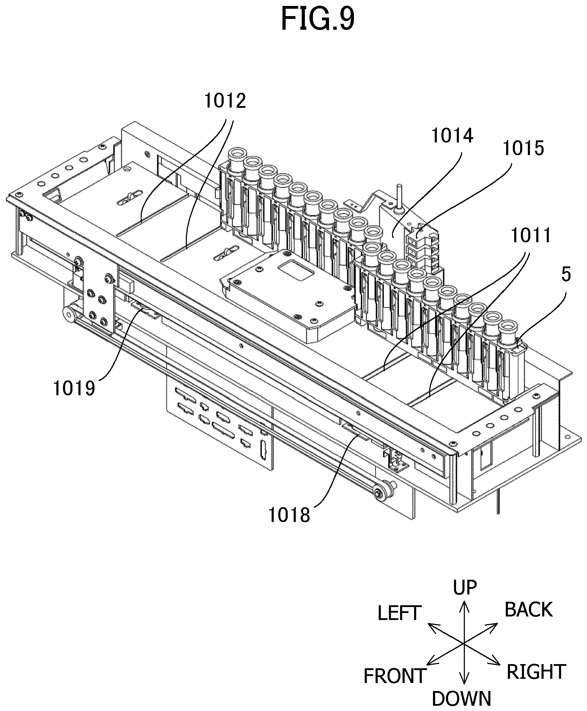

   Fig. 9 is a perspective view depicting an example of a disposition of the sample rack in S5.

### [Description of Embodiments]

An analyzing device according to an embodiment will be described with reference to the drawings.

### <Device Configuration>

Fig. 1 is a diagram depicting an example of an external view of the analyzing device. The analyzing device 1000 is an analyzing device that performs a plurality of types of analysis at different measurement accuracy levels, such as biochemical analysis and immunological analysis. The analyzing device 1000 can performs, for example, latex photometric immunoassay (LPIA) and measurement of blood coagulation time. The analyzing device 1000 includes a measuring unit housing portion 1, a tank housing portion 2, a monitor 3 and a status output unit 4. The measuring unit housing portion 1 houses a plurality of measuring units according to the embodiment. The tank housing portion 2 houses, for example, tanks to store pure water, cleaning water and waste water respectively, a discarding box to collect cuvettes to be discarded, and a computer to control processing performed by the measuring unit housing portion 1. The monitor 3 is connected to the computer, and outputs the progress state, the result, and the like, of the measurement. The monitor 3 may be an input/output device on which the user can perform input operation, such as a touch panel. The status output unit 4 is connected to a computer or the like, and turns an alarm lamp ON or causes the alarm lamp to blink to notify the user of an abnormality which may occur during the processing executed in the measuring unit housing portion 1.

Fig. 2 is a plan view depicting an example of the configuration inside the measuring unit housing portion 1 of the analyzing device 1000. The measuring unit housing portion 1 includes a table 101 on which sample racks are placed, a cuvette supply unit 102, a sample nozzle unit 103, a reagent table 104, a reagent cover open/close unit 105, a reagent nozzle unit 106, a coagulation table 107, an LPIA table 108, a cuvette chuck unit 109, a rail 110 and a cuvette discarding port 111. The lower right of Fig. 2, in the plan view, indicates that the table 101 side is the front, the rail 110 side is the back, and the left and right facing the device from the front are the left and right respectively. The sample racks are placed on the table 101, and are transported on the table by a mechanism included in the analyzing device 1000.

The cuvette supply unit 102 supplies a predetermined-shaped cuvette for use by the analyzing device 1000. The sample nozzle unit 103, which includes a nozzle connected with a pump, moves in a predetermined movable range based on the control by the computer, and collects a sample from each sample container and discharges the sample to a cuvette on the LPIA table 108. Specifically, the sample nozzle unit 103 rotates in a circular-shaped arc in plan view, with a predetermined rotating shaft at the center. In the plan view, a dispensing position is set at an intersection between the circular arc track on which the sample nozzle unit 103 moves, and a circular track on which the cuvettes, disposed in a circle on the LPIA table 108, rotationally move. Further, in the plan view, a nozzle cleaning tank may be disposed on the track on which the sample nozzle unit 103 moves.

The reagent table 104 is a disk type holding unit, on which a plurality of reagent containers containing reagent are held, and rotates based on the control by the computer. Reagent in each reagent container that is held is collected by the reagent nozzle unit 106 at a predetermined collecting position. The reagent cover open/close unit 105 is a unit that moves in a predetermined movable range, and opens/closes the cover of the reagent container based on the control by the computer. The reagent nozzle unit 106, which includes a nozzle connected with a pump, moves in a predetermined movable range based on the control by the computer, and collects reagent from each reagent container and discharges the reagent to each cuvette. In the plan view, a reagent nozzle cleaning rank may be disposed on the path where the reagent nozzle unit 106 linearly moves.

The coagulation table 107 is a holding unit having a plurality of holes which lineup to hold a plurality of cuvettes to measure a degree of coagulation of content of each cuvette. A light source and a light receiving unit are disposed on each side of the cuvettes to be held, and the degree of coagulation is measured based on the absorbance or transmittance of the content. In the plan view, an attaching/detaching position is set at a position where the track on which the cuvette chuck unit 109 crosses.

The LPIA table 108, which is a disk type holding unit, holds a plurality of cuvettes arranged in a circle in the plan view, in order to measure the antigen level in a sample by LPIA, and rotates based on the control by the computer. Each cuvette to be held is attached or detached by the cuvette chuck unit 109 at a predetermined attaching/detaching position, and reagent is dispensed to each cuvette at a predetermined dispensing position.

The cuvette chuck unit 109 moves in a predetermined movable range, and holds and moves the cuvettes based on the control by the computer. The rail 110 is a linear rail, and the reagent nozzle unit 106 and the cuvette chuck unit 109 move on the rail 110 respectively. The cuvette discarding port 111 is an opening linked to the discarding box stored in the tank housing portion 2, and is used for discarding cuvettes into the cuvette discarding port 111.

Fig. 3 is a perspective view depicting an example of the sample rack. Fig. 4 is a front view depicting an example of the sample rack. The sample rack 5 has a plurality of holders 51 arranged in a row, and a number of holders is 10 in the example in Fig. 3 and Fig. 4. In each holder 51, a sample container 52 to contain a biological sample, such as a blood sample, is held. In the example in Fig. 3, 10 sample containers 52 are held on the holders 51 respectively. As illustrated in Fig. 4, the sample containers 52 may include a plurality of types of containers having different heights. The sample containers 52 include, for example, a sample cup that contains a sample, a blood collection tube that contains blood, and an additional cup for diluting or mixing samples. The sample rack 5 is transported on the table 101 based on the control by the computer, and a desired container 52 is disposed at a predetermined collecting position on the table 101. Each collecting position exists on the track where the sample nozzle unit 103 moves in a circular arc shape in the plan view, and the sample is dispensed to each cuvette, which is held in a holding hole on the LPIA table 108, by the sample nozzle unit 103. Identification information, such as a barcode and a two-dimensional code (identification information of the sample), may be attached as a label or directly printed on the outer surface of each sample container 52. Further, as illustrated in Fig. 4, identification information 53, to specify a sample rack 5, is attached to one end of the side face of the sample rack 5.

Fig. 5 is a perspective view depicting an example of the table 101. Fig. 6 is a plan view depicting an example of the table 101. The table 101 includes slits 1011 and 1012 formed in the front/back direction, a transport device 1013 that transports the sample rack in the left/right direction, a container identifying device 1014, a container type determining device 1015, a rack detecting device 1016 (not illustrated in Fig. 5), a rail 1017, a carry-in device 1018 (not illustrated in Fig. 6), and a carry-out device 1019 (not illustrated in Fig. 6). The table 101, including the transport device 1013 illustrated in Fig. 5 and Fig. 6, is an example of the transport mechanism according to the present invention.

The carry-in device 1018 is disposed below the slits 1011, and allows protruding pieces (not illustrated) to protrude out to/recede from the table 101 through the slits 1011, and moves the protruding pieces in the protruded state in the front/back direction along the slits 1011, so that the sample rack 5, placed on a carry-in lane (arrow D1 in Fig. 6) on the table 101, is moved backward on the table 101. In Fig. 6, a plurality of regions A1, indicated by rounded rectangles (broken lines), indicate positions where each sample rack 5 is placed and stopped in the transport process. In other words, in the plan view, the sample racks 5 are placed on the table 101 in a plurality of rows in the lateral direction. This means that in the plan view, each sample rack 5 holds a plurality of sample containers 52 in a row in a first direction, and a plurality of sample racks 5 are disposed on the table 101 sequentially in a second direction perpendicular to the first direction. The transport device 1013 has two rack holding units 10131, which are disposed at a width where both ends of the sample rack 5 in the left/right direction are contained. The transport device 1013 moves on the rail 1017, and transports the sample rack 5, which is carried into the space between the two rack holding units 10131 by the carry-in device 1018, in the left/right direction along a sampling lane (arrow D2 in Fig. 6) on the table 101. The carry-out device 1019 is disposed below the slits 1012, and allows protruding pieces (not illustrated) to protrude out to/recede from the table 101 through the slits 1012, and moves the protruding pieces in the protruded state in the front/back direction along the slits 1012, so that the sample rack 5, which is held between the two rack holding units 10131 of the transport device 1013, is moved forward on the table 101 along a carry-out lane (arrow D3 in Fig. 6) on the table 101. On the table 101, a plurality of sample racks 5 are consecutively carried in and sequentially processed. The carry-in lane, the sampling lane, and the carry-out line are collectively referred to as a "transport path".

The rack detecting device 1016 is a porcelain sensor disposed under the table 101, for example, and exists at a plurality of locations indicated by circles (broken lines) in Fig. 6. For example, the sample rack 5 includes magnets positioned near both ends of the bottom face in the longitudinal direction, and the computer, which is connected to the rack detecting devices 1016, can detect the presence of the sample rack 5 placed on the table 101. The container identifying device 1014 is a laser type barcode reader, which receives the laser light emitted from a laser diode using a light-receiving element to read the data, or is a camera linked with the image recognition software of a computer, for example, and reads the identification information attached to the side face of the sample container 52. The container type determining device 1015 is an infrared sensor which is disposed at a plurality of locations in the vertical (height) direction. The container type determining device 1015 detects the height of each sample container 52 held on the sample rack 5, and determines the type of sample container 52 out of a plurality of types, in accordance with the height.

The container identifying device 1014 and the container type determining device 1015 are connected to the transport device 1013, and move in tandem as one unit. The transport device 1013 has two rack holding units 10131 in the front area in the transporting direction of the sampling lane, and has the container identifying device 1014 and the container type determining device 1015 in the rear area in the transporting direction of the sampling lane. Therefore, while transporting the preceding sampling rack 5 held between the two rack holding units 10131, the container identifying device 1014 reads the identification information attached to the side face of each sample container 52 held on the subsequent sample rack 5, and the container type determining device 1015 determines the type of the sample container 52. The container identifying device 1014 and the container type determining device 1015 are collectively referred to as a "container sensor unit".

In this embodiment, transport of the preceding sample rack 5 or sampling from each sample container 52 held by the preceding sample rack 5, and identification of each sample container 52 held by the subsequent sample rack 5, are performed in parallel, whereby the sampling of the subsequent sample rack 5 is quickly started, and the dispensing operation to each vacant holder 51 can be avoided. For example, the transport device 1013 transports the preceding sample rack 5 in the above mentioned first direction, while the container sensor unit identifies the sample containers held on the subsequent sample rack. In other words, the direction of transporting the preceding sample rack is the same as the direction of the sample containers lined up on the subsequent sample rack, and the transport device 1013 can perform the processing of transporting the preceding sample rack 5 and the processing of identifying the sample containers 52 held on the subsequent sample rack 5 in parallel. Further, by integrating the transport device 1013 and the container sensor unit (container identifying device 1014 and the container type determining device 1015), space saving can be implemented.

### <Sampling Control>

Fig. 7 is a block diagram of the computer that controls sampling. The computer 21 housed in the tank housing portion 2 in Fig. 1 controls the operation in which the sample rack 5 on the table 101 is transported, while the sample rack 5 and the sample containers 52 are identified, and a sample is dispensed from the sample containers 52 to cuvettes. As illustrated in Fig. 7, the computer 21 includes a processor 211 and a storage device 212, and is connected to an analyzing device 1000 via an input/output interface.

The processor 211 is an arithmetic unit, such as a central processing unit (CPU), and performs processing according to this embodiment by executing a program. The example in Fig. 7 indicates functional blocks in the processor 211. In other words, the processor 211 functions as a device control unit 2111, a data acquisition unit 2112, and an identification processing unit 2113. The device control unit 2111 controls the analyzing device 1000 so that the specified analysis is performed on a sample based on the operation by the user, and transports the sample rack 5 on the table 101, for example. The data acquisition unit 2112 acquires data from units, such as the sensors of the container identifying device 1014, the container type determining device 1015 and the rack detecting device 1016 of the analyzing device 1000 via a predetermined input/output interface. The identification processing unit 2113 identifies the sample rack 5 and the sample containers 52 placed on the table 101 based on the data acquired by the data acquisition unit 2112. In accordance with the identified sample rack 5 and sample containers 52, the device control unit 2111 controls the analyzing device 1000, and dispenses the sample contained in each sample container 52 to a cuvette.

The storage device 212 is a main storage device, such as a random access memory (RAM) and a read only memory (ROM), or an auxiliary storage device, such as a hard disk (HDD), a solid-state drive (SSD), an embedded multi-media card (eMMC), and a flash memory. The main storage device secures a work area for the processor 211, and temporarily stores data outputted by the sensors. The auxiliary storage device stores a program according to this embodiment, data outputted by the sensors, and other data. It is assumed that the identification information indicated on each sample container 52 and order information that links the sample contained in the sample container 52 and measurement to be performed for this sample are stored in the storage device 212 in advance by operation by the user, or by data transmission/reception via a network or the like.

Fig. 8 is a processing flow chart depicting an example of the rack transport processing. The identification processing unit 2113 of the analyzing device 1000 determines whether a sample rack 5 exists on the table 101 based on the data acquired by the data acquisition unit 2112 (Fig. 8: S1). In this step, if the user places the sample rack 5 at a predetermined place on the table 101, the data acquisition unit 2112 detects the presence of the sample rack 5 based on the output of the rack detecting device 1016. In a case where it is determined that the sample rack 5 does not exist (S1: NO), the analyzing device 1000 ends the rack transport processing. The determination in S1 may be repeated until the end of processing is instructed to the computer 21 by user operation.

In a case where it is determined that the sample rack 5 exists (S1: YES), on the other hand, the identification processing unit 2113 identifies at least one of: the identification information attached to the sample rack 5, the identification attached to each sample container 52 held on the sample rack 5; and the type of each sample container 52 (Fig. 8: S2). In this step, the device control unit 2111 controls the carry-in device 1018 and transports the sample rack 5 to a predetermined read position. Then the device control unit 2111 moves the transport device 1013 and reads the identification information attached to the sample rack 5 and the identification information attached to each sample container 52 held on the sample rack 5, using the container identifying device 1014. The identification information on a plurality of sample containers 52 held on the sample rack 5 is sequentially read in the moving direction of the transport device 1013, from the sample container 52 on the rear side (right end) of the transport path toward the sample container 52 on the front side (left end) of the transport path. Identification information to identify the sample rack 5 is indicated by a barcode, for example, on the left end of the sample rack 5 on the back side and this identification information is read after the identification information of each sample container 52 is read. The acquired identification information for each sample rack 5 is sent to the computer 21 connected to the container identifying device 1014 and the container type determining device 1015. The sequence of sending the data at this time may be by the last-in-first-out (LIFO) method, that is, identification information on the sample rack 5 is sent first, then is sent sequentially from the identification information on the sample container 52 on the front side (left end) of the transport path to the identification information on the sample container 52 on the rear side (right end) of the transport path.

At the same time, the identification processing unit 2113 determines the type of each sample container 52 using the container type determining device 1015. The container type determining device 1015 determines the type of each sample container 52 held on the sample rack 5 based on the height of the sample container 52. The container identifying device 1014 and the container type determining device 1015 are connected to the transport device 1013 at a distance equivalent to a number of holders 51 of the sample rack 5, for example, so that the container identifying device 1014 reads identification information of a certain sample container 52, while the container type determining device 1015 determines a type of a sample container 52 that is distant from the above sample container 52 by a predetermined number of holders 51.

In a case where the identification information on a sample container 52 held in a certain holder 51 is successfully read, and/or in a case where the container type of the sample container 52 is specified, it may be determined that a sample container exists in this holder 51, and this holder 51 may become a target of the sampling processing in the later mentioned processing steps. For example, on a sample cup or the like containing a sample, such identification information as a barcode is attached and read by the container identifying device 1014. On the other hand, an additional cup or the like for mixing the sample, on which identification information is not attached, is carried onto the table 101 in an empty state, and a sample or the like is dispensed into this cup by the sample nozzle unit 103 in the sampling processing. Therefore in a case where the order information, which is inputted to the computer 21 separately, indicates that a sample container to be carried in is a sample container without an additional cup, the identification processing unit 2113 determines that a sample container exists if the identification information on the sample container 52 is successfully read and the container type is specified as a sample container based on the information acquired from the container sensor unit (container identifying device 1014 and container type determining device 1015). In a case where the order information indicates that a sample container to be carried in is an additional cup, the identification processing unit 2113 determines that a sample container exists if the container type is specified as the additional cup based on the information acquired from the container sensor unit.

The device control unit 2111 operates the carry-in device 1018 and the transport device 1013, and carries the sample rack 5 into the sampling lane (Fig. 8: S3). In this step, the sample rack 5 is carried into a place between the two rack holding units 10131 of the transport device 1013.

The identification processing unit 2113 also determines whether a subsequent sample rack 5 exists on the table 101 based on the data acquired by the data acquisition unit 2112 (Fig. 8: S4). In this step, in a case where the user places another sample rack 5 on the table 101, the data acquisition unit 2112 detects the presence of the sample rack 5 based on the output from the rack detecting device 1016.

In a case where a subsequent sample rack 5 exists (S4: YES), the device control unit 2111 operates the transport device 1013 and transports the preceding sample rack 5, while the identification processing unit 2113 identifies the identification information attached on the subsequent sample rack 5, the identification information attached on each sample container 52 held on the sample rack 5, and the type of each sample container 52 based on the information acquired from the container sensor unit (Fig. 8: S5). This step is essentially the same as the processing in S2 mentioned above, but the transport device 1013 holds the sample rack 5 and operates in this state in S5, whereas in S2, the transport device 1013 operates without holding the sample rack 5. Fig. 9 is a perspective view depicting an example of the disposition of the sample rack 5 in S5.

Specifically, Fig. 9 indicates the disposition when the container type determining device 1015 determines the type of the sample container 52 at the left end of the subsequent sample rack 5.

In a case where a subsequent sample rack 5 does not exist in S4 (S4: NO), on the other hand, the device control unit 2111 operates the transport device 1013 and transports 5 the preceding sample rack 5 (Fig. 8: S6). In this step, the preceding sample rack 5 is transported on the sample lane.

The device control unit 2111 dispenses a sample from each sample container 52 held on the preceding sample rack 5 to the cuvette (Fig. 8: S7). In the example of Fig. 7, the sample nozzle unit 103 extracts the sample from the third sample container from the front on the preceding sample rack 5. The order information, such as which of the plurality of holders 51 is holding each sample container 52, which sample is contained in each sample container 52 (and what kind of test is performed on the sample), is identified and stored in the storage device 212 in advance, hence sampling can be performed smoothly, while skipping vacant holders 51. Therefore, the efficiency of the sampling processing can be improved, particularly in a case where some holders 51 of the sample rack 5 are vacant.

Then the device control unit 2111 operates the carry-out device 1019 and carries out the preceding sample rack 5 (Fig. 8: S8). Further, the device control unit 2111 determines whether the information on the subsequent sample rack 5 has already been identified (Fig. 8: S9). In the case where the information on the subsequent sample rack 5 has been read and stored in the storage device 212 in S5, it is determined that the information has already been identified in this step.

In the case where it is determined that the information has already been identified (S9: YES), processing returns to S3, and the subsequent sample rack 5 is carried onto the sampling lane. On the other hand, in the case where it is determined that the information on the subsequent sample rack 5 has not yet been identified (S9: NO), processing returns to S1, and it is determined whether a new sample rack 5 is placed. As described above, the analyzing device 1000 consecutively executes the processing of carrying the sample rack 5, to be placed on the table 101, onto the sampling lane, and performing sampling.

### <Effect>

According to this embodiment, in the case where a plurality of sample racks 5 are consecutively carried into the measuring device 1000, the processing of transporting the preceding sample rack 5 on the sampling lane and the processing of identifying the subsequent sample rack 5 and sample containers 52 held on this sample rack 5 are performed in parallel in S5 in Fig. 8. In other words, it can be confirmed in advance before sampling whether the sampling containers 52 are carried in accordance with the order information, such as: which holders of a plurality of holders 51 are holding sample containers 52; and which measurement is performed on a sample linked to the identification information on the sample containers 52. Therefore in the processing in S7, sampling can be performed smoothly from the positions where the sample containers 52 are held, out of the plurality of holders 51. In other words, the efficiency of the sampling processing can be improved, particularly in the case where some holders 51 of the sample rack 5 are vacant.

### <Other>

The embodiments and modifications described above are merely examples, and the present invention is not limited to the above mentioned configurations.

### [Reference Signs List]

- 1000: Analyzing device
- 1: Measuring unit housing portion
- 101: Table
- 102: Cuvette supply unit
- 103: Sample nozzle unit
- 104: Reagent table
- 105: Reagent cover open/close unit
- 106: Reagent nozzle unit
- 107: Coagulation table
- 108: LPIA table
- 109: Cuvette chuck unit
- 110: Rail
- 111: Cuvette discarding port
- 2: Tank housing portion
- 3: Monitor
- 4: Status output unit
- 5: Sample rack
- 52: Sample container
- 3: Monitor
- 4: Status output unit
- 5: Sample rack
- 52: Sample container

## Claims

1. A transport mechanism that is disposed in a measuring device used for dispensing biological samples from sample containers configured to contain the biological samples to cuvettes, so as to perform a predetermined measurement, and transports a sample rack configured to hold the sample containers, the transport mechanism comprising:
a table (101) on which the sample rack (5) is provided in plurality and sequentially placed;
a container sensor unit (1014, 1015) configured to identify the sample containers (52) held on the sample rack (5); and
a transport device (1013) configured to transport the sample rack (5) holding the sample containers (52) identified by the container sensor unit (1014, 1015) by moving the sample rack (5) to a dispensing position at which the biological samples are dispensed, wherein
the container sensor unit is connected to the transport device (1013), wherein the transport device (1013) and the container sensor unit (1014, 1015) move in tandem as one unit, and
the transport device (1013) transports a preceding sample rack (5) while the container sensor unit (1014, 1015) identifies the sample containers (52) held on a subsequent sample rack (5).

2. The transport mechanism according to Claim 1, further comprising a sample rack detecting device (1016) configured to determine whether the subsequent sample rack (5) exists, and
when the sample rack detecting device (1016) determines that the subsequent sample rack (5) exists, the container sensor unit (1014, 1015) identifies sample containers (52) held on the subsequent sample rack (5).

3. The transport mechanism according to Claim 1 or 2,
wherein
predetermined identification information is indicated on an outer surface of each of the sample containers,
the container sensor unit (1014, 1015) includes: a sample container identifying device (1014) configured to read the identification information (53) indicated on each of the sample containers (52); and a type determining device (1015) configured to determine a type of each of the sample containers (52), and
the transport device (1013) transports a preceding sample rack (5), while the sample container identifying device (1014) reads the identification information (53) indicated on each of the sample containers (52) held on the subsequent sample rack (5), and the type determining device (1015) determines the type of each of the sample containers (52) held on the subsequent sample rack (5).

4. The transport mechanism according to any one of Claims 1 to 3, wherein
the sample rack (5) holds a plurality of the sample containers (52) in a row in a first direction in plan view,
a plurality of the sample racks (5) are placed on the table (101) in a second direction, which is perpendicular to the first direction, in plan view, and
the transport device (1013) transports a preceding sample rack (5) in the first direction while the container sensor unit (1014, 1015) identifies the sample containers (52) held on a subsequent sample rack (5).

5. An analyzing device comprising the transport mechanism according to any one of Claim 1 to 4,
the analyzing device (1000) including a computer (21) that controls operation of the transport mechanism and identifying processing of sample containers (52) by the container sensor unit (1014, 1015).

## Patentansprüche

1. Transportmechanismus, der in einer Messvorrichtung angeordnet ist, die zum Abgeben von biologischen Proben aus Probenbehältern, die konfiguriert sind, die biologischen Proben zu enthalten, in Küvetten, um eine vorgegebene Messung durchzuführen, verwendet wird, und ein Probengestell transportiert, das konfiguriert ist, die Probenbehälter zu halten, wobei der Transportmechanismus Folgendes umfasst:
einen Tisch (101), auf dem das Probengestell (5) in Mehrzahl und aufeinanderfolgend bereitgestellt wird;
eine Behältersensoreinheit (1014, 1015), die konfiguriert ist, die Probenbehälter (52), die auf dem Probengestell (5) gehalten werden, zu identifizieren; und
eine Transportvorrichtung (1013), die konfiguriert ist, das Probengestell (5), das die Probenbehälter (52) hält, die durch die Behältersensoreinheit (1014, 1015) identifiziert worden sind, zu transportieren, indem das Probengestell (5) zu einer Abgabeposition bewegt wird, an der die biologischen Proben abgegeben werden, wobei
die Behältersensoreinheit mit der Transportvorrichtung (1013) verbunden ist, wobei die Transportvorrichtung (1013) und die Behältersensoreinheit (1014, 1015) sich hintereinander als eine Einheit bewegen, und
die Transportvorrichtung (1013) ein vorhergehendes Probengestell (5) transportiert, während die Behältersensoreinheit (1014, 1015) die Probenbehälter (52), die auf einem nachfolgenden Probengestell (5) gehalten werden, identifiziert.

2. Transportmechanismus nach Anspruch 1, der ferner eine Probengestell-Detektionsvorrichtung (1016) umfasst, die konfiguriert ist zu bestimmen, ob das nachfolgende Probengestell (5) vorhanden ist, und
wobei dann, wenn die Probengestell-Detektionsvorrichtung (1016) bestimmt, dass das nachfolgende Probengestell (5) vorhanden ist, die Behältersensoreinheit (1014, 1015) Probenbehälter (52) identifiziert, die auf dem nachfolgenden Probengestell (5) gehalten werden.

3. Transportmechanismus nach Anspruch 1 oder 2, wobei
vorgegebene Identifizierungsinformationen auf einer Außenfläche jedes der Probenbehälter angegeben sind,
die Behältersensoreinheit (1014, 1015) Folgendes enthält: eine Probenbehälter-Identifizierungsvorrichtung (1014), die konfiguriert ist, die Identifizierungsinformationen (53), die auf jedem der Probenbehälter (52) angegeben sind, zu lesen; und eine Typbestimmungsvorrichtung (1015), die konfiguriert ist, einen Typ von jedem der Probenbehälter (52) zu bestimmen, und
die Transportvorrichtung (1013) ein vorhergehendes Probengestell (5) transportiert, während die Probenbehälter-Identifizierungsvorrichtung (1014) die Identifizierungsinformationen (53), die auf jedem der Probenbehälter (52) angegeben sind, die auf dem nachfolgenden Probengestell (5) gehalten werden, liest und die Typbestimmungsvorrichtung (1015) den Typ von jedem der Probenbehälter (52), die auf dem nachfolgenden Probengestell (5) gehalten werden, bestimmt.

4. Transportmechanismus nach einem der Ansprüche 1 bis 3, wobei
das Probengestell (5) in der Draufsicht mehrere der Probenbehälter (52) in einer Reihe in einer ersten Richtung hält,
mehrere der Probengestelle (5) in der Draufsicht in einer zweiten Richtung, die zur ersten Richtung senkrecht ist, auf dem Tisch (101) angeordnet sind, und
die Transportvorrichtung (1013) ein vorhergehendes Probengestell (5) in der ersten Richtung transportiert, während die Behältersensoreinheit (1014, 1015) die Probenbehälter (52), die auf einem nachfolgenden Probengestell (5) gehalten werden, identifiziert.

5. Analysevorrichtung, die den Transportmechanismus nach einem der Ansprüche 1 bis 4 umfasst,
wobei die Analysevorrichtung (1000) einen Computer (21) enthält, der den Betrieb des Transportmechanismus und die Identifizierungsverarbeitung der Probenbehälter (52) durch die Behältersensoreinheit (1014, 1015) steuert.

## Revendications

1. Mécanisme de transport qui est disposé dans un dispositif de mesure utilisé pour distribuer des échantillons biologiques à partir de contenants à échantillon configurés pour contenir les échantillons biologiques vers des cuvettes, de manière à effectuer une mesure prédéterminée, et transporte un porte-échantillons configuré pour maintenir les contenants à échantillon, le mécanisme de transport comprenant :
un plateau (101) sur lequel le porte-échantillons (5) est fourni en plusieurs exemplaires et placé séquentiellement ;
une unité (1014, 1015) formant capteur de contenant configurée pour identifier les contenants à échantillon (52) maintenus sur le porte-échantillons (5) ; et
un dispositif de transport (1013) configuré pour transporter le porte-échantillons (5) maintenant les contenants à échantillon (52) identifiés par l'unité (1014, 1015) formant capteur de contenant en déplaçant le porte-échantillons (5) vers une position de distribution à laquelle les échantillons biologiques sont distribués, dans lequel
l'unité formant capteur de contenant est reliée au dispositif de transport (1013), le dispositif de transport (1013) et l'unité (1014, 1015) formant capteur de contenant se déplaçant en tandem en tant qu'une seule unité, et
le dispositif de transport (1013) transporte un porte-échantillons (5) précédent pendant que l'unité (1014, 1015) formant capteur de contenant identifie les contenants à échantillon (52) maintenus sur un porte-échantillons (5) suivant.

2. Mécanisme de transport selon la revendication 1, comprenant en outre un dispositif (1016) de détection de porte-échantillons configuré pour déterminer si le porte-échantillons (5) suivant existe, et
lorsque le dispositif (1016) de détection de porte-échantillons détermine que le porte-échantillons (5) suivant existe, l'unité (1014, 1015) formant capteur de contenant identifie les contenants à échantillon (52) maintenus sur le porte-échantillons (5) suivant.

3. Mécanisme de transport selon la revendication 1 ou 2, dans lequel
des informations d'identification prédéterminées sont indiquées sur une surface extérieure de chacun des contenants à échantillon,
l'unité (1014, 1015) formant capteur de contenant comprend : un dispositif (1014) d'identification de contenant à échantillon configuré pour lire les informations d'identification (53) indiquées sur chacun des contenants à échantillon (52) ; et un dispositif (1015) de détermination de type configuré pour déterminer un type de chacun des contenants à échantillon (52), et
le dispositif de transport (1013) transporte un porte-échantillons (5) précédent, pendant que le dispositif (1014) d'identification de contenant à échantillon lit les informations d'identification (53) indiquées sur chacun des contenants à échantillon (52) maintenus sur le porte-échantillons (5) suivant, et le dispositif (1015) de détermination de type détermine le type de chacun des contenants à échantillon (52) maintenus sur le porte-échantillons (5) suivant.

4. Mécanisme de transport selon l'une quelconque des revendications 1 à 3, dans lequel
le porte-échantillons (5) maintient une pluralité de contenants à échantillon (52) en une rangée dans une première direction dans une vue en plan,
une pluralité de porte-échantillons (5) sont placés sur le plateau (101) dans une seconde direction, qui est perpendiculaire à la première direction, dans une vue en plan, et
le dispositif de transport (1013) transporte un porte-échantillons (5) précédent dans la première direction pendant que l'unité (1014, 1015) formant capteur de contenant identifie les contenants à échantillon (52) maintenus sur un porte-échantillons (5) suivant.

5. Dispositif d'analyse comprenant le mécanisme de transport selon l'une quelconque des revendications 1 à 4,
le dispositif d'analyse (1000) comprenant un ordinateur (21) qui commande le fonctionnement du mécanisme de transport et identifie le traitement des contenants à échantillon (52) par l'unité (1014, 1015) formant capteur de contenant.
